# EUROPEAN PATENT SPECIFICATION

(11) **EP 4 495 481 B1**
(45) Date of publication and mention of the grant of the patent: **01.04.2026**
(21) Application number: 24190128.9
(22) Date of filing: 22.07.2024
(51) Int. Cl.: F23D 11/44

(54) **GAS PREHEATING TORCH**
GASVORWÄRMBRENNER
CHALUMEAU DE PRÉCHAUFFAGE DE GAZ

(30) Priority: 21.07.2023 KR 20230095625
(43) Date of publication of application: 22.01.2025
(73) Proprietor: M.I.T. LIMITED, Seoul 04385 (KR)
(72) Inventor: CHOI, Myeong Gyu, 06549 Seoul (KR); JI, Hong Sik, 14573 Bucheon-si (KR)
(74) Representative: Verscht, Thomas Kurt Albert

(56) References cited:
- EP-A1- 1 561 995
- JP-A- H02 136 607
- KR-A- 20220 166 923
- US-A1- 2003 211 435

## Description

### CROSS REFERENCE TO RELATED APPLICATION

The present application claims priority to Korean Patent Application No. 10-2023-0095625, filed 21 07, 2023.

### BACKGROUND

### Technical Field

The present invention relates to a gas torch that projects a flame.

### Description of the Related Art

A gas torch is detachably attached to a gas container miniaturized in the shape of a can to project a flame from gas supplied from the gas container. Such a gas torch controls heat by regulating the discharged amount of compressed gas.

The gas torch includes an adaptor, a body, a burner, a gas regulating means, an igniter, and the like, the adaptor being disposed in the lower portion so as to be coupled to a portable gas container. The gas torch fabricated as an assembly of these components has a problem in that a flame is not stable since incomplete vaporization occurs due to low temperature.

Research and development for overcoming this problem are being actively undertaken. For example, a gas preheating system and a gas torch lamp including the same, disclosed in Korean Patent Application Publication No. 10-2022-0166923, have been developed.

However, the gas torch lamp developed as above is not efficient, which is problematic.

The foregoing is intended merely to aid in the understanding of the background of the present disclosure, and is not intended to mean that the present disclosure falls within the purview of the related art that is already known to those skilled in the art.

### Documents of Related Art

(Patent Document 1) Korean Patent Application Publication No. 10-2022-0166923 (published on December 20, 2022; entitled "GAS *PREHEATING SYSTEM AND GAS TORCH LAMP WITH THIS")*

### SUMMARY

Accordingly, the present invention is intended to overcome a problem caused by poor evaporation of gas due to low temperature and a problem in that the gas is not efficiently preheated even in the case that the gas is preheated.

In order to achieve at least one of the above objectives, according to one aspect of the present invention, there is provided a gas preheating torch that may increase the efficiency of preheating gas.

The gas preheating torch includes : a hollow adaptor module configured to be connected to a portable gas container; a gas valve body module having a gas flow path therein to discharge gas introduced from the portable gas container; a gas temperature change module including a gas inlet pipe having one end connected to a gas inlet hole of the gas valve body module, a bent gas pipe having one end integrally connected to the gas inlet pipe, and a gas outlet pipe having one end integrally connected to the other end of the bent gas pipe and the other end connected to a gas outlet hole of the gas valve body module; a heat exchange promotion module having one side attached to the gas inlet pipe and the other side attached to the gas outlet pipe to bring the gas inlet pipe and the gas outlet pipe in contact with each other and enable heat exchange between gas flowing through the inside of the gas inlet pipe and gas flowing through the inside of the gas outlet pipe; and a burner module having one end connected to the other end of the gas valve body module and located behind the bent gas pipe of the gas temperature change module to spray gas discharged from the gas valve body module, project a flame, and heat the bent gas pipe.

The bent gas pipe may be ring-shaped, thereby allowing the flame projected from the burner module to pass therethrough.

The gas temperature change module may further include fixing clips each having a gas pipe connection hole, to which at least one of one end of the gas inlet pipe and the other end of the gas outlet pipe is connected, wherein each of the fixing clips is detachably attached to the gas valve body module such that the gas pipe connection hole overlaps the gas inlet hole or the gas outlet hole gas valve body module, so that the gas is introduced from the gas valve body module to the gas inlet pipe and is discharged from the gas outlet pipe to the gas valve body module through the gas outlet hole.

According to the present invention, it is possible to stably project a flame by efficiently preheating gas discharged from a gas container.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a cross-sectional perspective view illustrating a gas preheating torch according to the present invention;
FIGS. 2A and 2B are views illustrating gas temperature change modules according to embodiments of the present invention, respectively;
FIGS. 3A and 3B are views illustrating heat exchange promotion modules according to embodiments of the present invention, respectively;
FIG. 4 is a view illustrating a state in which the gas inlet pipe and the gas outlet pipe illustrated in FIG. 3 are connected by means of the heat exchange promotion module such that heat is exchanged between liquefied gas flowing through the inside of the gas inlet pipe and liquefied gas flowing through the inside of the gas outlet pipe; and
FIG. 5 is a view illustrating a state in which the gas temperature change module is heated by a flame projected from the burner module according to an embodiment of the presentinvention.

### DETAILED DESCRIPTION OF THE DISCLOSURE

Advantages and features of the present invention, as well as methods of realizing the same, will be more clearly understood from the following detailed description of embodiments when taken in conjunction with the accompanying drawings. However, the present invention is not limited to specific embodiments to be described hereinafter but may be embodied in a variety of different forms. Rather, these embodiments are provided so that the description of the present invention will be complete and will fully convey the scope of the present invention to those skilled in the technical field to which the present invention pertains.

The present invention shall only be defined by the Claims while not being limited by the illustrated drawings. The drawings provided in the specification are only intended to fully convey the scope of the present invention. That is, the drawings provided in the specification are only provided to describe the present invention to those skilled in the art.

The drawings provided in the specification may not be identical with actual products of the present invention but be rather exaggerated.

Hereinafter, a gas preheating torch according to embodiments of the present disclosure will be described with reference to the accompanying drawings.

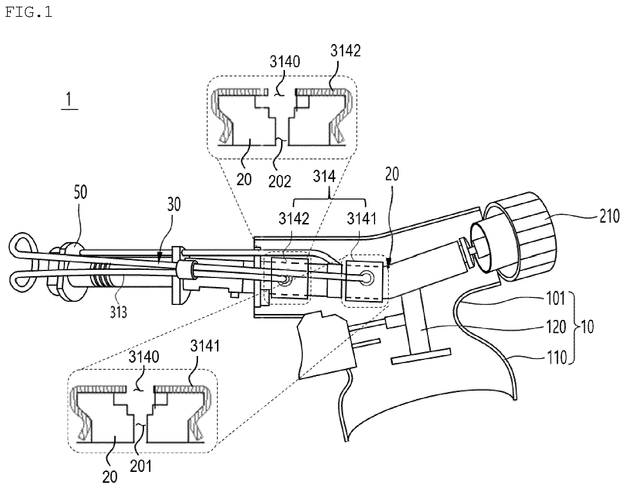

First, the gas preheating torch will be briefly described with reference to FIG. 1.

FIG. 1 is a cross-sectional perspective view illustrating the gas preheating torch according to the present invention.

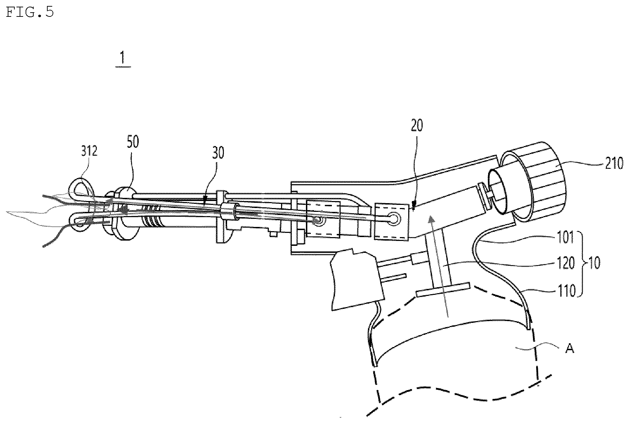

A gas preheating torch 1 is configured to rapidly change the temperature of liquefied gas supplied from a portable gas container A (see FIG. 5) to which the gas preheating torch 1 is attached, use the liquefied gas as a fuel, and allow a flame to be properly projected from a burner module 50. In particular, in the gas preheating torch 1, a heat exchange promotion module 40 is disposed between a gas inlet pipe 311 and a gas outlet pipe 313 of a gas temperature change module 30 to promote heat exchange between gas flowing through the gas inlet pipe 311 and gas flowing through the gas outlet pipe 313. In this manner, the gas preheating torch 1 may increase the temperature of the liquefied gas so that the liquefied gas may be completely evaporated and used as the fuel of a flame. Thus, the flame may be stably projected from the burner module 50. That is, the gas preheating torch 1 may preheat the liquefied gas discharged from the portable gas container A so that the liquefied gas may be completely burned, thereby allowing a flame to be stably projected.

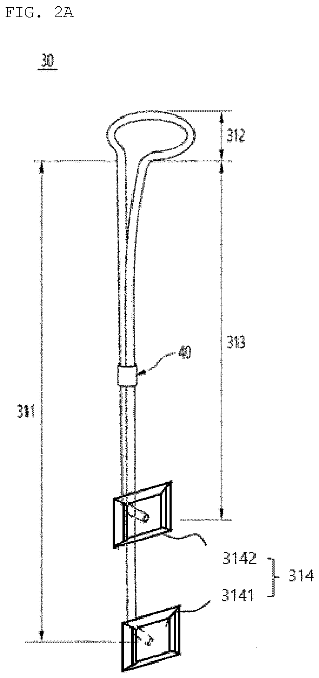

Hereinafter, components of the gas preheating torch and operations thereof will be described in detail with reference to FIGS. 2A to 3B.

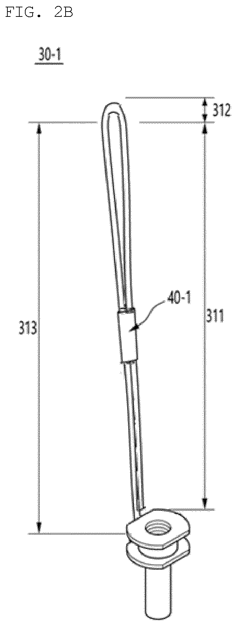

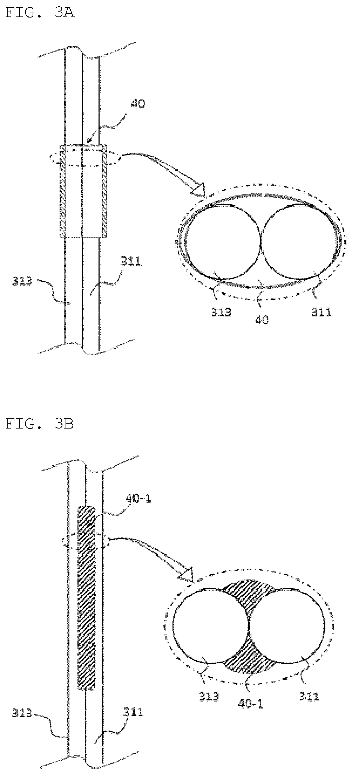

FIGS. 2A and 2B are views illustrating gas temperature change modules according to embodiments of the present invention, respectively, and FIGS. 3A and 3B are views illustrating heat exchange promotion modules according to embodiments of the present invention, respectively.

The gas preheating torch 1 includes an adaptor module 10, a gas valve body module 20, the gas temperature change module 30, the heat exchange promotion module 40, and the burner module 50. In addition, the gas preheating torch 1 may further include an igniter module configured to ignite a flame on the burner module 50, i.e., a generally-used ignition plug of a gas range. Here, the adaptor module 10 is coupled to the portable gas container A (see FIG. 5) to move the liquefied gas discharged from the portable gas container toward the gas valve body module 20. The adaptor module 10 includes a coupling portion 110 coupled to the portable gas container A and a communication portion 120 having one end connected to the coupling portion 110 and the other end connected to the gas valve body module 20.

The gas valve body module 20 has a gas flow path therein, through which gas introduced from the portable gas container is discharged. A gas inlet hole 201 and a gas outlet hole 202 spaced apart from the gas inlet hole 201 are formed in one side of the gas valve body module 20.

The gas inlet hole 201 may allow the gas introduced into the gas valve body module to the gas inlet pipe 311 described below, while the gas outlet hole 202 may allow the gas flowing through the gas outlet pipe 313 to flow into the gas valve body module 20. The adaptor module 10 is connected to one side of the gas valve body module 20, a gas regulator module 210 is disposed on the rear surface of the gas valve body module 20, and the burner module 50 is disposed on the front surface of the gas valve body module 20. The communication portion 120 of the adaptor module 10 and the gas valve body module 20 are accommodated in a body housing 101 as illustrated in FIG. 1.

Due to the gas temperature change module 30, the liquefied gas may be discharged with the increased temperature. The gas temperature change module 30 includes the gas inlet pipe 311 having one end connected to the gas valve body module 20, a bent gas pipe 312 having one end integrally connected to the gas valve body module 20, and the gas outlet pipe 313 having one end integrally connected to the other end of the bent gas pipe 312 and the other end connected to the gas valve body module 20. In addition, fixing clips 314 are provided on one end of the gas inlet pipe 311 and the other end of the gas outlet pipe 313, respectively. Here, the gas inlet pipe 311 is a pipe having one end connected to the gas inlet hole 201 of the gas valve body module 20, and the gas outlet pipe 313 is a pipe having the other end connected to the gas outlet hole 202 of the gas valve body module 20. In addition, the bent gas pipe 312 is a bent pipe portion between the gas inlet pipe 311 and the gas outlet pipe 313. That is, the gas temperature change module 30 may be a single pipe comprised of the gas inlet pipe 311, the bent gas pipe 312, and the gas outlet pipe 313, with a portion thereof being bent, or a plurality of pipes connected into a single pipe by welding or the like. Here, the gas inlet pipe 311 allows the liquefied gas supplied by the gas valve body module 20 to flow toward the bent gas pipe 312. The bent gas pipe 312 allows the liquefied gas flowed from the gas inlet pipe 311 toward the gas outlet pipe 313, with one end thereof being connected to the gas inlet pipe 311 and the other end thereof being connected to the gas outlet pipe 313. The gas inlet pipe 311 and the gas outlet pipe 313 may be located at a side of the burner module 50, and the bent gas pipe 312 may be located in front end of the burner module 50. Furthermore, one end and the other end of the bent gas pipe 312 connected to the gas inlet pipe 311 and the gas outlet pipe 313, respectively, may have the shape of an ellipse and be located in front of the burner module 50. In an example, the bent gas pipe 312 may have the shape of "Ω" as illustrated in FIG. 2A or "C" as illustrated in FIG. 2B. Here, the gas inlet pipe 311 and the gas outlet pipe 313 are connected by means of the heat exchange promotion module 40, as illustrated in FIG. 2A, to perform heat exchange between the liquefied gas flowing through the gas inlet pipe 311 and the liquefied gas flowing through the gas outlet pipe 313. Here, the gas temperature change module 30 may be formed from a copper (Cu) pipe having a thermal conductivity of 370W/mk at room temperature. In addition, the fixing clips 314 may be provided on one end of the gas inlet pipe 311 and the other end of the gas outlet pipe 313 to allow the gas inlet pipe 311 and the gas outlet pipe 313 to be detachably attached to the gas valve body module 20. Here, each of the fixing clips 314 may be made of an elastic material having elasticity so as to be detachably attached to the gas valve body module 20. For example, each of the fixing clips 314 may be made of carbon steel into an oblong elastic material as illustrated in FIGS. 1 to 2B.

As described above, the fixing clips 314 allow the gas inlet pipe 311 and the gas outlet pipe 313 to be detachably fixed to the gas valve body module 20 instead of being fastened to the gas valve body module 20 using bolts, thereby reducing manufacturing costs and manufacturing time. In this manner, the attachment to the gas valve body module 20 using the fixing clips 314 may have higher productivity and higher competitiveness compared to the fastening to the gas valve body module 20 using bolts.

The fixing clips 314 may have gas pipe connection holes 3140 in the central portions thereof, respectively, so as to overlap the gas inlet hole 201 and the gas outlet hole 202 of the gas valve body module 20, respectively. Thus, when one of the fixing clips 314 is disposed on one end of the gas inlet pipe, the corresponding gas pipe connection hole 3140 may overlap the gas inlet hole 201. In addition, when the other of the fixing clips 314 is disposed on the other end of the gas outlet pipe, the corresponding gas pipe connection hole 3140 may overlap the gas outlet hole 202.

The fixing clips 314 may be detachably fitted to the gas valve body module 20 so as to allow the gas to be introduced from the gas valve body module 20 to the gas inlet pipe 311 through the gas inlet hole 201 and the gas to be discharged from the gas outlet pipe 313 to the gas valve body module 20 through the gas outlet hole 202. The fixing clips 314 may include a first fixing clip 3141 provided on one end of the gas inlet pipe 311 and a second fixing clip 3142 provided on the other end of the gas outlet pipe 313.

The gas inlet pipe 311 on which the first fixing clip 3141 is disposed and the gas outlet pipe 313 on which the second fixing clip 3142 is disposed may be attached to each other by means of a heat exchange promotion module 40 or 40-1. For example, an outer surface of the gas inlet pipe 311 and an outer surface of the gas outlet pipe 313 may be in contact with each other by means of the heat exchange promotion module 40 or 40-1. Each of the heat exchange promotion modules 40 and 40-1 may be realized by welding or using a member such as a metal band or a metal clip. For example, as illustrated in FIG. 3A, the heat exchange promotion module 40 may be a metal band or a metal clip. Here, the metal band or the metal clip binds a portion of the gas inlet pipe 311 and a portion of the gas outlet pipe 313 together, so that heat discharged from the gas outlet pipe 313 is conducted to the gas inlet pipe 311. In addition, as illustrated in FIG. 3B, the heat exchange promotion module 40-1 may be formed by welding an alloy material comprised of copper (Cu), lead (Pb), and silver (Ag). For example, the exchange promotion module 40-1 may be formed from a welding rod such as a 5% Ag-Pb rod (Bcup). The heat exchange promotion module 40 or 40-1 is disposed between the gas inlet pipe 311 and the gas outlet pipe 313 to enable heat exchange between the gas inlet pipe 311 and the gas outlet pipe 313.

In particular, the heat exchange promotion module 40 or 40-1 disposed between the gas inlet pipe 311 and the gas outlet pipe 313 may rapidly transfer heat from the gas outlet pipe 313 to the gas inlet pipe 311 and may preheat the liquefied gas flowing through the gas inlet pipe 311 so as to increase the efficiency of final combustion of the liquefied gas.

When the liquefied gas flowing through the gas inlet pipe 311 is heated in the bent gas pipe 312 by the flame and then flows through the gas outlet pipe 313, each of the heat exchange promotion modules 40 and 40-1 receives heat from the liquefied gas flowing through the gas outlet pipe 313. That is, each of the heat exchange promotion modules 40 and 40-1 performs heat exchange between the gas flowing through the inside of the gas inlet pipe 311 and the gas flowing through the inside of the gas outlet pipe 313. At the same time, each of the heat exchange promotion modules 40 and 40-1 prevents temperature difference-induced corrosion, corrosion that would otherwise occur as water drops are exposed to a flame generated by the burner module 50, and the like. More specifically, the heat exchange promotion modules 40 and 40-1 conduct heat discharged from the gas outlet pipe 313 to the gas inlet pipe 311, with one of the heat exchange promotion modules 40 and 40-1 being attached to an outer portion of the gas inlet pipe 311 and the other of the heat exchange promotion modules 40 and 40-1 being attached to an outer portion of the gas outlet pipe 313. At the same time, the heat exchange promotion modules 40 and 40-1 increase the temperature of fluid flowing through the gas inlet pipe 311 and decrease the temperature of fluid flowing through the gas outlet pipe 313.

In particular, the heat exchange promotion modules 40 and 40-1 allow water drops formed on the surface of the gas inlet pipe 311 to be dried by heat discharged from the gas outlet pipe 313. Here, the heat exchange promotion modules 40 and 40-1 may cause the difference in the temperature between the gas inlet pipe 311 through which the liquefied gas discharged from the portable gas container flows and the bent gas pipe 312 heated by the flame projected from the burner module 50 to be 50°C or more, so that water drops formed on the surface of the gas inlet pipe 311 may be more rapidly dried.

The burner module 50 is a device disposed on one end of the gas valve body module 20 to project a flame B. One end of the burner module 50 is connected to the other end of a connecting body 310, and the burner module 50 is located behind the bent gas pipe 312. With this configuration, the burner module 50 sprays the gas discharged from the connecting body 310 and projects the flame, thereby heating the bent gas pipe 312.

The burner module 50 is disposed inside the gas valve body module 20 to generate combustion heat in response to the gas being supplied thereto. The igniter module may be located on one side of the burner module 50, while a portion of the gas temperature change module 30 may be located on the other side of the burner module 50. Here, the burner module 50 is configured such that the liquefied gas discharged from the portable gas container A connected to the coupling portion 110 of the adaptor module 10 is ignited.

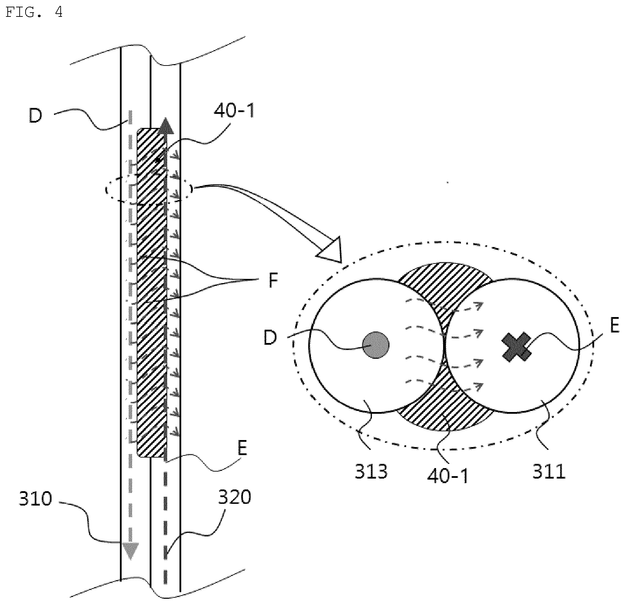

Hereinafter, with reference to FIGS. 4 and 5, a state in which heat is exchanged between liquefied gases and a state in which the gas temperature change module is heated by a flame projected from the burner module will be described in detail.

FIG. 4 is a view illustrating a state in which the gas inlet pipe and the gas outlet pipe are connected by means of the heat exchange promotion module such that heat is exchanged between the liquefied gas flowing through the inside of the gas inlet pipe and the liquefied gas flowing through the inside of the gas outlet pipe, and FIG. 5 is a view illustrating a state in which the gas temperature change module is heated by a flame projected from the burner module according to an embodiment of the present invention.

Heat exchange F is performed between the gas inlet pipe 311 and the gas outlet pipe 313 of the gas temperature change module 30, as illustrated in FIG. 4, thereby increasing the temperature of the liquefied gas introduced through the gas inlet pipe 311. At the same time, the liquefied gas, the temperature of which is increased, may rapidly move to the bent gas pipe 312. In addition, the heat exchange between the gas inlet pipe 311 and the gas outlet pipe 313 of the gas temperature change module 30 decreases the temperature of liquefied gas E flowing through the gas outlet pipe 313 and thus increases the speed of downward movement, thereby allowing the liquefied gas E to be rapidly supplied to the burner module 50.

As illustrated in FIG. 5, the gas preheating torch 1 rapidly changes the temperature of the liquefied gas supplied from the portable gas container A coupled to the adaptor module 10 by means of the gas temperature change module 30 so that the liquefied gas is properly used as a fuel and a flame is properly projected from the burner module 50. That is, the gas preheating torch 1 may preheat the liquefied gas discharged from the portable gas container A so as to be completely burned, and thus the flame may be stably projected.

Although the exemplary embodiments of the present invention have been described for illustrative purposes with reference to the accompanying drawings, those skilled in the art will appreciate that various modifications, additions, and substitutions are possible, without departing from the scope of the present invention as disclosed in the accompanying claims. Accordingly, the foregoing embodiments disclosed herein shall be interpreted as being illustrative, while not being limitative, in all aspects.

## Claims

1. A gas preheating torch comprising:
a hollow adaptor module (10) configured to be connected to a portable gas container (A);
a gas valve body module (20) having a gas flow path therein to discharge gas introduced from the portable gas container;
a gas temperature change module (30) comprising a gas inlet pipe (311) having one end connected to a gas inlet hole (201) of the gas valve body module, a bent gas pipe (312) having one end integrally connected to the gas inlet pipe, and a gas outlet pipe (313) having one end integrally connected to the other end of the bent gas pipe and the other end connected to a gas outlet hole (202) of the gas valve body module; and
a burner module (50) having one end connected to the other end of the gas valve body module (20) and located behind the bent gas pipe (312) of the gas temperature change module (30) to spray gas discharged from the gas valve body module (20), project a flame, and heat the bent gas pipe;
**characterized by** further comprising a heat exchange promotion module (40) having one side attached to the gas inlet pipe (311) and the other side attached to the gas outlet pipe (313) to bring the gas inlet pipe and the gas outlet pipe in contact with each other and enable heat exchange between gas flowing through the inside of the gas inlet pipe and gas flowing through the inside of the gas outlet pipe.

2. The gas preheating torch of claim 1, wherein the bent gas pipe (312) is ring-shaped, thereby allowing the flame projected from the burner module (50) to pass therethrough.

3. The gas preheating torch of claim 1 and/or 2, wherein the gas temperature change module (30) further comprises fixing clips (314) each having a gas pipe connection hole, to which at least one of one end of the gas inlet pipe (311) and the other end of the gas outlet pipe (313) is connected, wherein each of the fixing clips is detachably attached to the gas valve body module (20) such that the gas pipe connection hole overlaps the gas inlet hole or the gas outlet hole of the gas valve body module, so that the gas is introduced from the gas valve body module to the gas inlet pipe (311) and is discharged from the gas outlet pipe to the gas valve body module through the gas outlet hole.

## Patentansprüche

1. Ein Gasvorheizbrenneinrichtung, die folgendes aufweist:
ein hohles Adaptermodul (10), das konfiguriert ist, um mit einem tragbaren Gasbehälter (A) verbunden zu sein;
ein Gasventilkörpermodul (20) mit einem Gasströmungspfad darin, um von dem tragbaren Gasbehälter eingeführtes Gas abzulassen;
ein Gastemperaturänderungsmodul (30), das ein Gaseinlassrohr (311), das ein mit einem Gaseinlassloch (201) des Gasventilkörpermoduls verbundenes Ende hat, ein gebogenes Gasrohr (312), das ein einstückig mit dem Gaseinlassrohr verbundenes Ende hat, und ein Gasauslassrohr (313) mit einem Ende, welches einstückig mit dem anderen Ende des gebogenes Gasrohrs verbunden ist, und wobei das andere Ende mit einem Gasauslassloch (202) des Gasventilkörpermoduls verbunden ist, aufweist; und
ein Brennermodul (50), wobei dieses ein mit dem anderen Ende des Gasventilkörpermoduls (20) verbundenes Ende hat und hinter dem gebogenen Gasrohr (312) des Gastemperaturänderungsmoduls (30) angeordnet ist, um von dem Gasventilkörpermodul (20) abgelassenes Gas zu sprühen, eine Flamme zu projizieren, und das gebogene Gasrohr zu erwärmen; **dadurch gekennzeichnet, dass** diese ferner ein Wärmeaustauschförderungsmodul (40) aufweist, wobei dieses eine Seite hat, die ein an das Gaseinlassrohr (311) angebracht ist, und die andere Seite an den Gasauslassrohr (313) angebracht ist, um das Gaseinlassrohr und das Gasauslassrohr miteinander in Kontakt zu bringen und Wärmeaustausch zwischen Gas, welches durch die Innenseite des Gaseinlassrohrs strömt, und Gas, welches durch die Innenseite des Gasauslassrohrs strömt, zu ermöglichen.

2. Die Gasvorheizbrenneinrichtung nach Anspruch 1, wobei das gebogene Gasrohr (312) ringförmig ist, um dadurch der von dem Brennermodul (50) projizierten Flamme zu gestatten, dahindurch zu gehen.

3. Die Gasvorheizbrenneinrichtung nach Anspruch 1 und/oder 2, wobei das Gastemperaturänderungsmodul (30) ferner Befestigungsklemmen (314) aufweist, wobei jede ein Gasrohrverbindungsloch hat, mit dem wenigstens eines von einem Ende des Gaseinlassrohrs (311) und dem anderen Ende des Gasauslassrohrs (313) verbunden ist, wobei jede der Befestigungsklemmen lösbar an dem Gasventilkörpermodul (20) derart angebracht ist, dass das Gasrohrverbindungsloch das Gaseinlassloch oder das Gasauslassloch des Gasventilkörpermoduls überlappt, so dass das Gas von dem Gasventilkörpermodul zu dem Gaseinlassrohr (311) eingeführt wird und von dem Gasauslassrohr zu dem Gasventilkörpermodul durch das Gasauslassloch abgelassen wird.

## Revendications

1. Chalumeau de préchauffage de gaz comprenant :
un module adaptateur creux (10) configuré pour être raccordé à un récipient à gaz portatif (A) ;
un module de corps de vanne à gaz (20) ayant un trajet d'écoulement de gaz pour évacuer le gaz introduit à partir du récipient à gaz portatif ;
un module de changement de température de gaz (30) comprenant un tuyau d'entrée de gaz (311) ayant une extrémité raccordée à un orifice d'entrée de gaz (201) du module de corps de vanne à gaz, un tuyau de gaz coudé (312) ayant une extrémité raccordée d'un seul tenant au tuyau d'entrée de gaz, et un tuyau de sortie de gaz (313) ayant une extrémité raccordée d'un seul tenant à l'autre extrémité du tuyau de gaz coudé et l'autre extrémité raccordée à un orifice de sortie de gaz (202) du module de corps de vanne à gaz ;
et
un module brûleur (50) ayant une extrémité raccordée à l'autre extrémité du module de corps de vanne à gaz (20) et situé derrière le tuyau de gaz coudé (312) du module de changement de température de gaz (30) pour pulvériser un gaz évacué du module de corps de vanne à gaz (20), projeter une flamme et chauffer le tuyau de gaz coudé, **caractérisé en ce qu'**il comprend en outre un module de promotion d'échange thermique (40) ayant un côté fixé au tuyau d'entrée de gaz (311) et l'autre côté fixé au tuyau de sortie de gaz (313) pour mettre le tuyau d'entrée de gaz et le tuyau de sortie de gaz en contact l'un avec l'autre et permettre un échange thermique entre du gaz circulant à l'intérieur du tuyau d'entrée de gaz et du gaz circulant à l'intérieur du tuyau de sortie de gaz.

2. Chalumeau de préchauffage de gaz selon la revendication 1, dans lequel le tuyau de gaz coudé (312) est en forme d'anneau, permettant ainsi à la flamme projetée par le module brûleur (50) de passer à travers celui-ci.

3. Chalumeau de préchauffage de gaz selon la revendication 1 et/ou 2, dans lequel le module de changement de température de gaz (30) comprend en outre des attaches de fixation (314) ayant chacune un orifice de raccordement de tuyau de gaz, auquel est raccordée au moins l'une parmi une extrémité du tuyau d'entrée de gaz (311) et l'autre extrémité du tuyau de sortie de gaz (313), dans lequel chacune des attaches de fixation est fixée de manière détachable au module de corps de vanne à gaz (20) de sorte que l'orifice de raccordement de tuyau de gaz chevauche l'orifice d'entrée de gaz ou l'orifice de sortie de gaz du module de corps de vanne à gaz, de sorte que le gaz soit introduit à partir du module de corps de vanne à gaz vers le tuyau d'entrée de gaz (311) et soit évacué à partir du tuyau de sortie de gaz vers le module de corps de vanne à gaz par l'orifice de sortie de gaz.
